# EUROPÄISCHE PATENTANMELDUNG

(11) **EP 1 228 999 A2**
(43) Veröffentlichungstag der Anmeldung: **07.08.2002**
(21) Anmeldenummer: 02001398.3
(22) Anmeldetag: 19.01.2002
(51) Int. Cl.: C01B 3/32, C01B 3/38, C01B 3/58

(54) **Gaserzeugungssystem für ein Brennstoffzellensystem und Verfahren zum Betrieb eines Gaserzeugungssystem**

(30) Priorität: 02.02.2001 DE 10104607
(71) Anmelder: Ballard Power Systems AG, 73230 Kirchheim / Teck-Nabern (DE)
(72) Erfinder: Boneberg, Stefan, 72660 Beuren (DE); Schäfer, Martin, 73230 Kirchheim/Teck (DE); Schüssler, Martin, Dr., 89073 Ulm (DE); Heuser, Ralph, 89075 Ulm (DE); Theis, Erik, 73230 Kirchheim/Teck-Nabern (DE)
(74) Vertreter: Kaufmann, Ursula Josefine, Dr.rer.nat. Dipl.-Phys.

(57) **Zusammenfassung**

Die Erfindung betrifft ein Gaserzeugungssystem für ein Brennstoffzellensystem (3) sowie ein Verfahren zum Betrieb desselbigen. Um nach der Inbetriebnahme dem Brennstoffzellensystem möglichst schnell wasserstoffhaltiges Brenngas bei reduzierter Abgasemission zur Verfügung stellen zu können, wird vorgeschlagen, daß zur Inbetriebnahme des Gaserzeugungssystems zumindest ein katalytischer Brenner (5) gestartet und die erzeugte Wärme zur Verdampfung eines Brennmittels und/oder Wasser und zur Aufheizung einer zusätzlich zugeschalteten Teilreformierungseinheit (7) oder partiellen Oxidationsstufe (7) verwendet wird, um durch Reformierung bzw. partielle Oxidation ein wasserstoffhaltiges Gas für die Brennstoffzelleneinheit (3) zu erzeugen.

## Beschreibung

Die vorliegende Erfindung betrifft ein Gaserzeugungssystem für ein Brennstoffzellensystem sowie ein Verfahren zum Betrieb eines Gaserzeugungssystems nach dem Oberbegriff der unabhängigen Ansprüche.

Die verschiedenen Komponenten eines Gaserzeugungssystems, wie Reformer, selektive Oxidationsstufen, katalytische Brenner, benötigen für ihre Funktion eine bestimmte Betriebstemperatur (Reformierungsreaktoren beispielsweise mindestens 200 °C). Für den Start eines Gaserzeugungssystems müssen die Komponenten auf Betriebstemperatur aufgeheizt werden. Die Aufheizung mittels elektrischer Energie ist aufgrund des schlechten Wirkungsgrades nicht zweckmäßig. Außerdem kann die zur Verfügung stehende elektrische Energie (vor allem in Fahrzeugen) zu gering sein, um damit das System zu starten. Weiterhin soll die Startzeit möglichst kurz sein.

Aus der JP 8-133701 A ist es bekannt, zur Kaltstartverbesserung eines selektiven Oxidationskatalysators zur schnellen Erwärmung einen Sauerstoffüberschuß in den Katalysator zu leiten, so daß neben Kohlenmonoxid auch Wasserstoff oxidiert wird.

Die DE 19825772 A1 schlägt vor, einen Dampfreformer zum Startzeitpunkt mittels eines Heizelements schnell vorzuheizen und anschließend Sauerstoff zusammen mit Methanol und Wasserdampf dem Reformer zuzuführen, um sofort Umwandlungsreaktionen zu starten. Nach Erreichen der Betriebstemperatur kann die Sauerstoffzufuhr unterbrochen werden.

Schließlich ist aus der DE 3345958 A1 bekannt, Methanol mit Luft zu verbrennen und die heißen Verbrennungsabgase zum Wärmetausch am Katalysatorbett entlangzuleiten, um sie anschließend direkt durch das Katalysatorbett zu führen. Ist die Betriebstemperatur von 480 °C erreicht, wird zur Beheizung Wasserstoff des Brennstoffzellenabgases verwendet, um die notwendige Crack-Temperatur aufrecht zu erhalten.

Der vorliegenden Erfindung liegt die Aufgabe zugrunde, für ein eingangs erwähntes Gaserzeugungssystem für ein Brennstoffzellensystem, das elektrische Verbraucher, insbesondere den Elektromotor eines Fahrzeugs mit Strom versorgt, ein Verfahren anzugeben, durch das eine möglichst schnelle Inbetriebnahme des Systems ermöglicht wird, sowie ein geeignet ausgestaltetes Gaserzeugungssystem anzugeben. Insbesondere sollen während der Startphase dem Brennstoffzellensystem möglichst schnell wasserstoffhaltiger Brennstoff zur Verfügung gestellt und die Abgasemissionen auf ein zulässiges Maß begrenzt werden.

Diese Aufgabe wird erfindungsgemäß durch die Merkmale des Patentanspruchs 1 bzw. 8 gelöst. Vorteilhafte Ausgestaltungen ergeben sich aus den jeweiligen Unteransprüchen.

Beim erfindungsgemäßen Verfahren wird zur Inbetriebnahme des Gaserzeugungssystems zumindest einer der katalytischen Brenner gestartet und die von diesem erzeugte Wärme zur Verdampfung von Wasser und der (dem Reformer zuzuführenden) Kohlenwasserstoffe wie Methanol und zur Aufheizung eines dem Reformer zugeschalteten Teilreformers verwendet. Der Teilreformer arbeitet mit niedrigerem Durchsatz als der eigentliche Reformer des Gaserzeugungssystems. Anstelle des Teilreformers kann auch eine partielle Oxidationsstufe (POX) zugeschaltet sein, in der zugeführte Kohlenwasserstoffe wie Methanol mit einem Oxidationsmittel wie Luft zu einem wasserstoffhaltigen Gas umgesetzt werden. Dabei erfolgt die Erwärmung der Komponenten im wesentlichen über den chemischen Umsatz von Brennmitteln, so daß zum Starten des Systems wird nur in geringem Umfang elektrische Energie einer Fahrzeugbatterie notwendig ist.

Im Ergebnis können durch das erfindungsgemäße Verfahren zumindest ein Teil der Komponenten des erfindungsgemäßen Gaserzeugungssystems in kurzer Zeit auf Betriebstemperatur gebracht werden. Die Teilreformierungs- oder partielle Oxidationseinheit liefert Reformat bzw. wasserstoffhaltiges Gas, das in der nachgeschalteten selektiven Oxidationsstufe von Kohlenmonoxid gereinigt wird. Die Brennstoffzelle kann mit dem gereinigten wasserstoffhaltigen Gas in Betrieb genommen werden und erzeugt Strom, so daß bei einem Fahrzeug ein Fahrbetrieb möglich ist und die Hilfsaggregate des Brennstoffzellensystems, wie Kompressoren, nunmehr von der Brennstoffzelle und nicht mehr von der elektrischen Hilfsenergie, wie der Fahrzeugbatterie, gespeist werden. Die heißen Gase oder Abgase der schon erwärmten Komponenten heizen die übrigen Komponenten stetig auf. Ein weiterer Vorteil ist, daß auch beim Kaltstart des Systems unerwünschte Emissionen unterbunden werden können, da diese von dem oder den katalytischen Brennern umgesetzt werden können.

Weitere Vorteile und Ausgestaltungen der Erfindung gehen aus den weiteren Ansprüchen und der Beschreibung hervor.

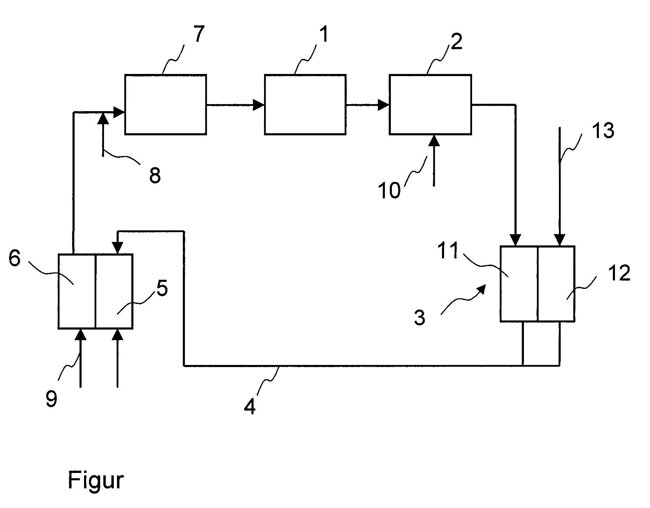

Anhand der Zeichnung wird im folgenden ein Ausführungsbeispiel der Erfindung und ihre Vorteile näher erläutert.

Die Erfindung' ist besonders für Fahrzeuge geeignet, die mit einem Brennstoffzellensystem ausgerüstet sind.

Die Figur zeigt schematisch einen bevorzugten Aufbau zum Betrieb eines erfindungsgemäßen Gaserzeugungssystems für ein Brennstoffzellensystem.

Die Figur zeigt ein Brennstoffzellensystem mit einer Brennstoffzelleneinheit 3, die von einem Gaserzeugungssystem mit wasserstoffhaltigem Brenngas versorgt wird. Das Gaserzeugungssystem weist die folgenden Komponenten auf: einen Reformer 1 zur Reformierung eines Brennmittels wie etwa Kohlenwasserstoffe, Alkohole, Ether, wobei das wasserstoffhaltige Reformat Kohlenmonoxid enthält. Da Kohlenmonoxid Brennstoffzellen vergiftet, ist es notwendig, den Kohlenmonoxidanteil im Reformat auf unter 50 ppm, besser unter 10 ppm zu reduzieren. Hierzu ist mindestens eine selektive Oxidationsstufe 2 vorgesehen, in der katalytisch Kohlenmonoxid zu Kohlendioxid oxidiert wird. Der hierfür benötigte Sauerstoff kann in Form von Luft über die Luftleitung 10 zugeführt werden. Das gereinigte wasserstoffhaltige Reformat wird der Anodenseite 11 der Brennstoffzelleneinheit 3 zugeleitet. Oxidationsmittel wie Luft gelangt über Leitung 13 in die Kathodenseite 12 der Brennstoffzelleneinheit 3. Die Abgase der Brennstoffzelleneinheit 3, im wesentlichen Wasser sowie elektrochemisch nicht umgesetzter Wasserstoff werden über eine Leitung 4 abgeleitet. In dieser Leitung kann ein Wasserabscheider vorgesehen sein.

Weiterhin ist ein katalytischer Brenner 5 ist mit einem Verdampfer 6 gekoppelt. Im Verdampfer 6 wird Brennmittel und/oder Wasser verdampft, um diese Medien dem Reformer 1 und einer zugeschalteten Teilreformierungs- oder POX-Einheit 7 zuzuführen. Im katalytischen Brenner 5 wird im Normalbetrieb der Wasserstoff des Anodenabgases exotherm zu Wasser umgesetzt. Hierzu wird über Leitung 4 Wasserstoff dem katalytischen Brenner 5 zugeführt und die erzeugte Wärme gelangt über Wärmetausch zum Verdampfer 6, dem die zu verdampfenden Medien über Leitung 9 zugeführt werden.

Gemäß der Erfindung ist die partielle Oxidationsstufe 7 (POX) oder die mit einem katalytischen Brenner gekoppelte Teilreformierungseinheit 7 als zusätzliche Komponente des Gaserzeugungssystems vorgesehen. Die Teilreformierungs- oder partielle Oxidationsstufe 7 kann dem Reformer 1 vor- oder auch nachgeschaltet sein. Der zur Reformierung notwendige Luftsauerstoff wird über Leitung 8 der Teilreformierungseinheit 7 zugeführt, während Brennmittel wie Methanol und Wasserdampf vom Verdampfer 6 zugeleitet werden. Bei Verwendung einer POX-Stufe 7 wird das Brennmittel (Methanol) zusammen mit Luftsauerstoff direkt umgesetzt. Die Teilreformierungseinheit 7 kann mit einem eigenen katalytischen Brenner gekoppelt sein oder auch mit dem katalytischen Brenner 5. Es ist auch möglich, einen katalytischen Brenner vorzusehen, der den Verdampfer 6 und/oder die Teilreformierungseinheit 7 mittels Heißgas beheizt.

Erfindungsgemäß wird zunächst der zumindest eine katalytische Brenner 5 und/oder der der Teilreformierungseinheit 7 des Gaserzeugungssystems gestartet, wobei das Aufheizen zum Startzeitpunkt gegebenenfalls mit elektrischer Hilfe erfolgen kann. Vorzugsweise wird hierzu elektrische Leistung einer im Fahrzeug vorhandenen Fahrzeugbatterie verwendet.

Dem katalytischen Brenner 5 wird ein Brennmittel, insbesondere der zur Reformierung eingesetzte Alkohol, vorzugsweise Methanol, zugeführt, wobei auch beispielsweise Wasserstoff aus einem Wasserstofftank verwendet werden kann. Die bei der exothermen Umsetzung des Brennmittels frei werdende Wärme wird erfindungsgemäß zur Verdampfung der dem Reformer 1 zuzuführenden Brennmittel (wie Methanol) verwendet, wobei die Brennmittel nicht sogleich dem Reformer 1 des Gaserzeugungssystems zugeleitet werden, sondern einer entsprechend ausgelegten Teilreformierungsstufe 7. Dieser Teilreformer 7 steht mit dem katalytischen Brenner 5 und/oder einem anderen katalytischen Brenner in Wärmetausch, so daß ein schnelles Anspringen der Reformierung garantiert ist. Anstelle des Teilreformers 7 kann erfindungsgemäß auch eine partielle Oxidationsstufe 7 (POX) verwendet werden, in der das verdampfte Brennmittel direkt mit Luft umgesetzt wird. Die partielle Oxidationsstufe 7 wird parallel mit dem oder den katalytischen Brennern 5 aufgeheizt. Dies erfolgt durch die Umsetzung von Brennmittel (flüssig oder gasförmig) mit Luft.

Nach Starten des Brennstoffzellensystems kann wasserstoffhaltiges Anodenabgas der Brennstoffzelleneinheit 3 zur weiteren Versorgung des oder der katalytischen Brenner 5 herangezogen werden.

Beim Starten des Brennstoffzellensystems werden verschiedene Phasen durchlaufen. Das System durchläuft eine Aufheizphase, auf die eine Phase mit reduzierter Leistung folgen kann, bis schließlich der Normalbetrieb erreicht ist. In der Phase reduzierter Leistung werden vorzugsweise nur 20% - 80% der maximalen Systemleistung im Normalbetrieb erzeugt. In der Aufheizphase werden zunächst die Bauteile, die für den Betrieb mit reduzierter Leistung notwendig sind, auf Betriebstemperatur gebracht, vorzugsweise durch Verbrennung eines Brennmittels, etwa Methanol oder Wasserstoff. Nach der Aufheizphase wird nur in der betriebswarmen Stufe, wie etwa einer Einheit zur Durchführung einer partiellen Oxidation des Brennmittels oder einer kombinierten Einheit mit katalytischem Brenner/Reformer ein Reformat erzeugt und gegebenenfalls in einer nachgeschalteten Stufe zur selektiven Oxidation von Kohlenmonoxid gereinigt. Die Brennstoffzelle kann mit gereinigtem Reformat in Betrieb genommen werden und erzeugt Strom, so dass ein Fahrbetrieb möglich ist und Hilfsaggregate des Brennstoffzellensystems von der Brennstoffzelle und nicht mehr von einer elektrischen Hilfsquelle, wie etwa einer Fahrzeugbatterie. Gespeist werden. Gleichzeitig findet ein weiteres Aufheizen der restlichen Bauteile statt.

Wird die Phase mit reduzierter Leistung übersprungen, verlängert sich jedoch die erfindungsgemäß reduzierte Startzeit des Brennstoffzellensystems etwas.

Bei der erfindungsgemäßen Aufheizphase werden zunächst bevorzugt Bauteile, die für den Betrieb mit reduzierter Leistung notwendig sind, auf ihre Betriebstemperatur gebracht. Dazu wird zur Inbetriebnahme des Gaserzeugungssystems nun ein Brennstoff, wie beispielsweise das zu reformierende Methanol, dem katalytischen Brenner 5 zugeleitet. Falls die Teilreformierungseinheit 7 über einen eigenen katalytischen Brenner verfügt, oder ein separater katalytischer Brenner zur Beheizung des Verdampfers 6 und der Teilreformierungseinheit 7 vorgesehen ist, kann das erfindungsgemäße Verfahren entsprechend auch mit diesen Komponenten erfolgen. Bevorzugt wird jedenfalls zuerst zumindest ein katalytischer Brenner gestartet. Durch das Starten des oder der katalytischen Brenner ist gewährleistet, daß unerwünschte Emissionen des zunächst noch kalten Systems reduziert werden können oder unterbleiben, da der oder die katalytischen Brenner diese weitgehend umsetzen kann.

In der im folgenden beschriebenen Ausgestaltung wird davon ausgegangen, daß die Teilreformierungseinheit 7 durch den katalytischen Brenner 5 beheizt wird. Es ist auch möglich, als dem katalytischen Brenner 5 zuzuführendes Brennmittel Wasserstoff aus einem Wasserstoffspeicher zu verwenden. Die durch die exotherme katalytische Umsetzung erzeugte Wärme wird an den Verdampfer 6 abgegeben. Es sei darauf hingewiesen, daß der Verdampfer 6 auch als Heißgasverdampfer mit einem vorgeschalteten katalytischen Brenner ausgeführt sein kann. Der katalytische Brenner 5 kann gegebenenfalls mittels elektrischer Hilfe beim Start kurz aufgeheizt werden. Der katalytische Brenner 5 kann auch mehrstufig aufgebaut sein.

Ein Teil der im katalytischen Brenner 5 erzeugten Wärme wird erfindungsgemäß an die Teilreformierungseinheit 7 abgegeben, um diese aufzuheizen. Das vom Verdampfer 6 zugeführten Brennmittel und der Wasserdampf werden zusammen mit Luft aus der Zufuhrleitung 8 der Teilreformierungseinheit 7 zugeführt, wo ein wasserstoffhaltiges Reformat erzeugt wird. Genauso ist es möglich, eine partielle Oxidations-(POX)-Stufe 7 einzusetzen, um ein wasserstoffhaltige Gas zu erzeugen. Das erwärmte Gas gelangt über den noch kalten Reformer 1 in die selektive Oxidationsstufe 2, in der es katalytisch von Kohlenmonoxid gereinigt wird. Um höhere Mengen Kohlenmonoxid in der selektiven Oxidationsstufe 2 umsetzen zu können, kann diese dadurch vorgeheizt werden, daß eine zusätzliche Menge Luftsauerstoff über Leitung 10 zudosiert wird, so daß ein Teil des Reformats zur Wärmeerzeugung verbrannt wird. Wasserstoffhaltiges gereinigtes Reformat gelangt anschließend zur Anodenseite 11 der Brennstoffzelle 3, die sogleich zur Stromerzeugung in der auf die Aufheizphase folgende Phase mit reduzierter Leistung eingesetzt werden kann, bei der die Brennstoffzelle 3 nur etwa 20% - 80% der maximalen Systemleistung erzeugt.

Während der Phase mit reduzierter Leistung werden weitere Komponenten aufgeheizt. Außer der Zugabe zusätzlicher Luft zum Vorheizen der selektiven Oxidationsstufe 2 kann auch eine Zudosierung eines anderen Oxidationsmittels erfolgen. Durch die Zudosierung verbrennt ein Teil des eingeleiteten Reformats. Außerdem kann dem katalytischen Brenner 5 zusätzlich Luft und/oder Brennstoff (wie Methanol) zudosiert werden. Weiterhin erfolgt ein kontinuierliches Aufheizen der Komponenten des Gaserzeugungssystems indirekt oder direkt über die heißen Gase oder Abgase der bereits erwärmten Komponenten.

In dieser Phase wird die maximal zur Verfügung stehende Leistung des Brennstoffzellensystems entsprechend der Durchwärmung der Bauteile kontinuierlich gesteigert, bis sämtliche Bauteile des Gaserzeugungssystems auf Betriebstemperatur gebracht sind. Im Normalbetrieb kann dann die volle Leistung des Systems genutzt werden.

Nach Anspringen der Brennstoffzellen kann dem katalytischen Brenner 5 Anodenabgas über die Leitung 4 zugeführt werden, so daß die systemextern zuzuführende Brennstoffmenge entsprechend reduziert werden kann. Im Normalbetrieb wird der katalytische Brenner 5 vorzugsweise von Anodenabgas betrieben.

Eine weitere Möglichkeit, um insbesondere einen Start bei Tieftemperaturen zu gewährleisten, ist, vor eine oder mehrere zu beheizende Komponenten des Gaserzeugungssystems eine Kaltstartkomponente vorzuschalten. Diese Kaltstartkomponente kann optional auch in die zu beheizende Stufe integriert werden. Als mögliche Kaltstartkomponenten kommen adiabate katalytische Brenner oder Flammbrenner in Betracht. Diese können evtl. zusätzlich mit einer elektrischen Starteinrichtung, wie z.B. eine Glüh- und/oder Zündkerze, einer zusätzlichen Luftdosierung oder einer zusätzlichen Brennstoffdosierung ausgestattet sein. Eine weitere Möglichkeit besteht im Vorschalten einer zentralen Kaltstartkomponente, die parallel mehrere Reaktoren beheizt.

Der schematisch dargestellte Aufbau kann um weitere Komponenten ergänzt werden, wie sie sich aus den Unteransprüchen ergeben. Insbesondere können Kaltstartkomponenten wie adiabate katalytische Brenner oder Flammbrenner vorgesehen sein, die zum Start bei tiefen Temperaturen durch chemische Umsetzung bzw. Verbrennung von Brennstoffen möglichst schnell Wärme erzeugen. Diese Kaltstartkomponenten können in die zu beheizenden Komponenten des Gaserzeugungssystems integriert sein.

Die Erfindung ermöglicht eine schnelle Inbetriebnahme eines Brennstoffzellensystems zur Stromerzeugung, auch bei niedrigen Temperaturen. Der zur Reduzierung der Abgasemission vorgesehene katalytische Brenner kann bereits während der Startphase die Emissionen auf ein zulässiges Maß begrenzen. Gleichzeitig sorgt der katalytische Brenner dafür, die zur Reformierung notwendigen Komponenten verdampfen zu können und eine Teilreformierungseinheit oder eine POX-Stufe vorzuheizen, um ein wasserstoffhaltiges Gas erzeugen zu können.

## Patentansprüche

1. Verfahren zum Betrieb eines Gaserzeugungssystems für ein Brennstoffzellensystem (3), wobei das Gaserzeugungssystem aufweist
- einen Reformer (1) zur Reformierung von Kohlenwasserstoffen,
- eine oder mehrere selektive Oxidationsstufen (2) zur Entfernung von im Reformat enthaltenem Kohlenmonoxid sowie
- einen oder mehrere katalytische Brenner (5) zur katalytischen Umsetzung eines Brennstoffes, insbesondere des Brennstoffzellenabgases,
**dadurch gekennzeichnet,**
**daß** zur Inbetriebnahme des Gaserzeugungssystems in einer Aufheizphase zumindest einer der katalytischen Brenner (5) gestartet und die erzeugte Wärme zur Verdampfung eines Brennmittels und/oder Wasser und zur Aufheizung einer zusätzlich zugeschalteten Teilreformierungseinheit (7) oder einer zugeschalteten partiellen Oxidationsstufe (7) verwendet wird, wobei durch Reformierung bzw. partielle Oxidation ein wasserstoffhaltiger Gasstrom für die Brennstoffzelleneinheit (3) erzeugt wird und auf die Aufheizphase eine Phase folgt, bei der die Brennstoffzelleneinheit (3) mit reduzierter Leistung betrieben wird.

2. Verfahren nach Anspruch 1,
**dadurch gekennzeichnet,**
**daß** der zumindest eine katalytische Brenner (5) nach dem Start zunächst mit elektrischer Leistung aufgeheizt wird.

3. Verfahren nach Anspruch 1 oder 2,
**dadurch gekennzeichnet,**
**daß** dem zumindest einen katalytischen Brenner (5) als Brennstoff zu reformierende Kohlenwasserstoffe oder Wasserstoff, evtl. aus einem Wasserstoffspeicher, nach dem Starten zugeführt wird.

4. Verfahren nach einem der Ansprüche 1 bis 3,
**dadurch gekennzeichnet,**
**daß** zumindest eine der selektiven Oxidationsstufen (2) durch erhöhte Luftdosierung vorgeheizt wird.

5. Verfahren nach einem der Ansprüche 1 bis 4,
**dadurch gekennzeichnet,**
**daß** der zumindest eine katalytische Brenner (5) durch zusätzliche Luft- und/oder Brennstoffdosierung aufgeheizt wird.

6. Verfahren nach einem der Ansprüche 1 bis 5,
**dadurch gekennzeichnet,**
**daß** zumindest eine der Komponenten des Gaserzeugungssystems, wie der Reformer (1), die zumindest eine selektive Oxidationsstufe (2), der zumindest eine katalytischen Brenner (5), und evtl. die Brennstoffzelleneinheit (3) selbst durch die heißen Gase bzw. Abgase der bereits erwärmten Komponenten aufgeheizt werden.

7. Verfahren nach einem der Ansprüche 1 bis 6,
**dadurch gekennzeichnet,**
**daß** vor eine oder mehrere der Komponenten des Gaserzeugungssystems, wie der Reformer (1), die zumindest eine selektive Oxidationsstufe (2), der zumindest eine katalytische Brenner (5), als Kaltstartkomponente ein adiabater katalytischer Brenner oder ein Flammbrenner vorgeschaltet wird, der evtl. eine zusätzliche elektrische Starteinrichtung, eine zusätzliche Luft- und/oder Brennstoffdosierung aufweist.

8. Gaserzeugungssystem für ein Brennstoffzellensystem (3), das aufweist
- einen Reformer (1) zur Reformierung von Kohlenwasserstoffen,
- eine oder mehrere selektive Oxidationsstufen (2) zur Entfernung von im Reformat enthaltenem Kohlenmonoxid sowie
- einen oder mehrere katalytische Brenner (5) zur katalytischen Umsetzung eines Brennstoffes, insbesondere des Brennstoffzellenabgases,
**dadurch gekennzeichnet,**
**daß** zumindest ein katalytischer Brenner (5) thermisch mit einem Verdampfer (6) zur Verdampfung von Kohlenwasserstoffen und/oder Wasser gekoppelt ist, und daß eine mit zumindest einem katalytischen Brenner (5) thermisch gekoppelte Teilreformierungseinheit (7) oder partielle Oxidationsstufe (7) zur Inbetriebnahme des Gaserzeugungssystems diesem zugeschaltet ist.

9. Gaserzeugungssystem nach Anspruch 8,
**dadurch gekennzeichnet,**
**daß** der zumindest eine katalytische Brenner (5) mit einem Speicher für zu reformierende Kohlenwasserstoffe wie Methanol oder für Wasserstoff verbunden ist.

10. Gaserzeugungssystem nach Anspruch 8 oder 9,
**dadurch gekennzeichnet,**
**daß** der zumindest eine katalytische Brenner (5) eine elektrische Heizeinrichtung aufweist.

11. Gaserzeugungssystem nach einem der Ansprüche 8 bis 10,
**dadurch gekennzeichnet,**
**daß** als Kaltstartkomponente ein adiabater katalytischer Brenner oder ein Flammbrenner vor eine oder mehrere der Komponente des Gaserzeugungssystems, wie der Reformer (1), die zumindest eine selektive Oxidationsstufe (2) und der zumindest eine katalytische Brenner (5), vorgeschaltet ist, wobei die Kaltstartkomponente evtl. eine zusätzliche elektrische Starteinrichtung, eine zusätzliche Luft- und/oder Brennstoffdosierung aufweist.
